# EUROPÄISCHE PATENTANMELDUNG

(11) **EP 1 484 588 A1**
(43) Veröffentlichungstag der Anmeldung: **08.12.2004**
(21) Anmeldenummer: 04012972.8
(22) Anmeldetag: 02.06.2004
(51) Int. Cl.: G01K 11/06

(54) **Anzeigeelemente für Auftauvorgänge**

(30) Priorität: 06.06.2003 DE 10325714
(71) Anmelder: Herrmann, Karsten, 79111 Freiburg (DE); Knittel, Heinz, 79110 Freiburg (DE)
(72) Erfinder: Meyer, Ralf Peter, Dr., 79117 Freiburg (DE); Kern, Alexander, 79249 Merzhausen (DE); Gathof, Kurt, Dr., 79100 Freiburg (DE)
(74) Vertreter: Maucher, Wolfgang, Dipl.-Ing.

(57) **Zusammenfassung**

Offengelegt werden Anzeigeelemente zum optischen Erkennbarmachen von Überschreitungen bestimmter Temperaturen, insbesondere von Auftautemperaturen. Die Erfindung betrifft auch Herstellungsverfahren für derartige Anzeigeelemente, die Verwendung derartiger Anzeigeelemente, sowie Herstellungsverfahren für neue Komponenten davon. Die Anzeigeelemente sind *dadurch gekennzeichnet, dass* sie
(i) Substanzen und/oder
(ii) Reaktionskomponenten zur Bildung solcher Substanzen beinhalten, die jeweils in sie mindestens teilweise umgebende molekulare Hüllen, die in einer oberhalb dieser Temperaturen flüssigen Phase gelöst und/oder emulgiert sind, eingeschlossen sind, wobei die Einschließung sowie die Substanzen und/oder Reaktionskomponenten derart ausgebildet sind, dass die entsprechenden Substanzen und/oder Reaktionskomponenten erst nach dem Unterschreiten und anschließenden Überschreiten der besagten bestimmten Temperaturen mindestens teilweise aus einer eingeschlossenen Form in eine oberhalb dieser Temperaturen flüssige Phase freisetzbar sind und dort zu einer dauerhaften optisch erfassbaren Veränderung des Anzeigeelementes führen.

## Beschreibung

Die Erfindung betrifft Anzeigeelemente zum optischen Erkennbarmachen von Überschreitungen bestimmter Temperaturen, insbesondere von Auftautemperaturen, wie nachfolgend und in den Ansprüchen näher beschrieben. Die Erfindung betrifft auch Herstellungsverfahren für derartige Anzeigeelemente, die Verwendung derartiger Anzeigeelemente, sowie Herstellungsverfahren für neue Komponenten davon.

### Hintergrund der Erfindung

Im Gesundheitswesen und im Nahrungsmittelgewerbe entstehen pro Jahr Schäden im Bereich von 3-5 % des Gesamt-Produktumsatzes in den Bereichen Life Sciences, wie beispielsweise bei pharmazeutischen Produkten und in der Transplantationsmedizin, wie auch im Lebensmittelbereich, durch den Verderb oder die Zerstörung von dauerhaft zu kühlenden Produkten, bei denen die Kühlkette unterbrochen wurde. Dies kann im Extremfall Erkrankungen bis hin zum Tod nach der Aufnahme mikrobiell (beispielsweise durch Bakterien und/oder Pilze) kontaminierter Ware nach sich ziehen. Wird die Ware einer zu hohen Temperatur zu lange exponiert, ist dies nur schwer nachzuweisen. Im Falle von Transplantaten besteht die Gefahr der Schädigung beispielsweise auch durch das Transplantat schädigende biochemische Vorgänge bei zu hohen Temperaturen, im Falle von Pharmazeutika beispielsweise die Gefahr einer chemischen Zersetzung oder physikalischer Veränderungen aufgrund zu hoher Temperaturen. In aller Regel müssen die hierbei entstehenden Kosten schließlich von der Solidargemeinschaft getragen werden, obwohl sie auf individuellen Fehlleistungen fußen.

Ziel der vorliegenden Erfindung ist, eine effiziente Kontrolle der Einhaltung von Kühlketten zu ermöglichen und bei vergleichsweise geringer Investition für die Kunden eine höchstmögliche Sicherheit zu gewährleisten.

Es existieren bereits eine Reihe von Vorschlägen für Indikatoren für Unterbrechungen der Kühlkette. So schlägt beispielsweise die Deutsche Patenanmeldung DE 100 21 313 A1 visuelle Indikatoren für pH-änderungsabhängige, temperaturänderungsabhängige oder feuchtigkeitsabhängige Indikatoren vor, die in erster Linie an feste Träger, wie Teststreifen, gebunden sein sollen. Auch die DE 199 12 529 erwähnt Etiketten, die durch eine Farbumschlagsreaktion eingearbeiteter Thermoindikatoren eine Kontrolle der Unterbrechung von Kühlketten ermöglichen sollen. Analoges findet sich im Gebrauchsmuster DE 200 02 797. Die DE 199 11 484 erwähnt Temperaturvorgeschichte-Anzeigen, die eine Farbbildungsschicht mit farbbildender Komponente und eine Farblöschungsschicht umfassen - die farblöschende Komponente kann auch mikroverkapselt sein.

Andere Indikatoren beruhen auf dem Mischen von nach dem Überschreiten der Schmelztemperatur ineinander verfließenden Medien, entweder unter Vermischung gefärbter mit ungefärbten Komponenten, wie in DE-OS 27 48 023 gezeigt, und/oder durch Verlust bestimmter geometrischer Formen durch Schmelzen oberhalb der Auftautemperatur, wie beispielsweise in DE 37 12 201 oder DE 37 16 972 A1 beschrieben.

Wieder andere Indikatoren machen Gebrauch von Aufsaugvorgängen oberhalb einer Auftautemperatur flüssiger, beispielsweise gefärbter Komponenten in Kapillaren enthaltende Schichten, die sich dadurch entsprechend verfärben (vgl. DE-OS 199 04 935 A1).

Noch komplexer sind Vorrichtungen, die magnetische Dispersionen in optisch oder magnetisch erfassbarer Struktur beinhalten, die bei Überschreiten der Auftautemperatur durch Magnete zerstört wird, so dass eine sichtbare Veränderung stattfindet (vgl. DE-OS 42 10 739 A1).

Nachteilig an all diesen Varianten ist, dass die entsprechenden Indikatorvorrichtungen nur schwierig hergestellt werden können und nach der Herstellung stets bei hinreichend tiefer Temperatur gehalten werden müssen, um den Farbumschlag oder die Formänderung zu vermeiden, oder im Falle mehrschichtiger Indikatoren erst am Substrat (einer Verpackung oder dergleichen für ein zu kühlendes Produkt oder das zu kühlende Produkt selbst) durch Zusammenfügen der Komponenten, Druckvorgänge, Magnetisierung oder dergleichen hergestellt werden können.

Aufgabe der vorliegenden Erfindung ist daher, neue Temperaturgeschichte-Indikatoren zur Verfügung zu stellen, welche die genannten Probleme vermeiden und darüber hinaus weitere Vorteile aufweisen.

### Allgemeine Beschreibung der Erfindung

Es wurde nun überraschend gefunden, dass auf Basis der nachfolgend im einzelnen beschriebenen Erfindung ein Anzeigeelement zum optischen Erkennbarmachen von Überschreitungen bestimmter Temperaturen zur Verfügung gestellt werden kann, das erst durch das Unterschreiten einer bestimmten Temperatur (beispielsweise der optisch erkennbar zu machenden Auftautemperatur eines Produktes) aktiviert wird. Dies ermöglicht in bevorzugten Ausführungsformen der Erfindung die Aufbewahrung des Anzeigeelementes oberhalb dieser bestimmten Temperatur (beispielsweise bei Raumtemperatur) ohne das zwingende Erfordernis der Lagerung oder Anbringung bei Temperaturen unterhalb dieser Temperatur. Als Folge treten erst beim erneuten Überschreiten dieser Temperatur Änderungen ein, die es ermöglichen, dass das Überschreiten optisch erkennbar wird, und zwar auch unabhängig davon, ob abschließend wieder unter diese Temperatur abgekühlt wird, wie es gerade bei einer vorübergehenden Unterbrechung der Kühlkette geschieht. Die erfindungsgemäßen Anzeigeelemente ermöglichen eine produktspezifische, dauerhafte und eindeutige Anzeige einer Unterbrechung der Kühlkette (insbesondere auch tief-)gekühlter Produkte.

### Detaillierte Beschreibung der Erfindung

Die Erfindung betrifft vor allem Anzeigeelemente zum optischen Erkennbarmachen von Überschreitungen bestimmter Temperaturen, insbesondere von Auftautemperaturen, dadurch gekennzeichnet, dass die Anzeigeelemente
(i) Substanzen und/oder
(ii) Reaktionskomponenten zur Bildung solcher Substanzen beinhalten, die jeweils in sie mindestens teilweise umgebende molekulare Hüllen, die in einer oberhalb dieser Temperaturen flüssigen Phase gelöst und/oder emulgiert sind, eingeschlossen sind, wobei die Einschließung sowie die Substanzen und/oder Reaktionskomponenten derart ausgebildet sind, dass die entsprechenden Substanzen und/oder Reaktionskomponenten erst nach dem Unterschreiten, insbesondere unter Erstarren des sie umgebenden Mediums, und anschließenden Überschreiten, insbesondere unter Schmelzen des sie umgebenden Mediums, der besagten bestimmten (insbesondere Auftau-)Temperaturen mindestens teilweise aus der eingeschlossenen Form in die oberhalb dieser Temperaturen flüssige Phase freisetzbar sind und dort zu einer dauerhaften optisch, insbesondere visuell, erfassbaren Veränderung des Anzeigeelementes führen.

Die Erfindung betrifft auch Herstellungsverfahren für derartige Anzeigeelemente, dadurch gekennzeichnet, dass man die genannten Substanzen (i) und/oder Reaktionskomponenten (ii) derartiger Substanzen (a) in sie mindestens teilweise umgebende molekulare Hüllen einschließt und, falls nicht bei diesem Schritt bereits geschehen, (b) in einer oberhalb einer bestimmten Temperatur flüssigen Phase löst oder emulgiert, und (c), falls nicht bereits während des Schrittes (a) und/oder (b) geschehen, in ein Anzeigebehältnis füllt.

Die Erfindung betrifft auch die Verwendung der erfindungsgemäßen Anzeigeelemente zum optischen Erkennbarmachen, insbesondere Visualisieren, von Unterbrechungen der Kühlkette bei Produkten, dadurch gekennzeichnet, dass entsprechende Anzeigeelemente vor oder nach dem Beginn des Kühlens an den entsprechenden Produkten befestigt werden.

Sie betrifft ferner die Verwendung von (A) zur Herstellung von Einschlussverbindungen geeigneten Stoffen zur Umhüllung von (B) jeweils vor- und nachstehend definierten Substanzen (i) oder Reaktionskomponenten (ii), wobei die Komponenten (A) und (B) gemischt werden, und deren Weiterverwendung zur Herstellung von erfindungsgemäßen Anzeigeelementen.

Schließlich betrifft die Erfindung neue Herstellungsverfahren für neue Komponenten der genannten Anzeigeelemente.

Die vor- und nachstehend genannten allgemeinen Begriffe haben, soweit nicht anders angegeben, vorzugsweise die nachfolgend genannten Bedeutungen, wobei unabhängig voneinander jeweils ein oder mehrere oder alle allgemeinen Ausdrücke bei den nachfolgend genannten bevorzugten Ausführungsformen der Erfindung durch die spezifischeren Definitionen ersetzt werden können, was jeweils zu weiter bevorzugten Ausführungsformen der Erfindung führt:

Anzeigeelemente sind in erster Linie in fertiger Gebrauchsform geschlossene Anzeigebehältnisse (Umhüllungen oder Behälter), wie mindestens an einer Stelle oder insgesamt transparente (insbesondere durchsichtige) Beutelchen, Ampullen, Patronen, Tuben, Fläschchen, Dosen, Blistern oder dergleichen, die vorzugsweise flach (beispielsweise mit einer möglichen bevorzugten Dicke von nicht mehr als 5, wie insbesondere von 1 bis 2 mm) aus transparenten Materialien, wie Glas oder vorzugsweise Kunststoffen, beispielsweise aus formsteifen Thermoplasten oder insbesondere aus Kunststofffolie(n) vor allem in (beispielsweise vorzugsweise abgeflachter) Beutelform, aus üblichen Kunststoffen, wie Polyvinylalkohol, Poly((vinylalkohol)₇₀-co-(ethylen)₃₀), Polyvinylchlorid, Copolymere aus Vinylidenchlorid und Vinylchlorid und/oder Acrylnitril, wie Saran®, oder Polyamid 6 (biaxial orientiert), Polyethylen, Polypropylen, Polyethylen (terephthalat), Polystyrol, Polycarbonat, Poly(methyl(meth)-acrylat, Poly(hydroxybutyrat-co-valerat, Polyetherimid, oder vorzugsweise aus nachwachsenden Rohstoffen herstellbare Folien, etwa aus Zellglas, oder insbesondere entsprechende biologisch abbaubare Folien, beispielsweise basierend auf Stärke (gewonnen beispielsweise aus Kartoffeln oder Mais), Chitosan (gewonnen aus Chitinpanzern von Insekten), Casein (gewonnen aus Milch), Zein (aus Mais) oder Polyhydroxybutyrat (= PHB-gewonnen aus Bakterien), wie Maisfolien, erforderlichenfalls lackiert oder beschichtet; falls nötig oder erwünscht, jeweils mit üblichen Zusatzstoffen, wie Weichmachern (bei biologisch abbaubaren Folien beispielsweise Polyalkohole wie Propantriol und/oder Sorbitol), Licht- und UV-Stabilisatoren, Sensibilisatoren (für biologischen Abbau) oder dergleichen; welche die genannten Substanzen (i), Reaktionskomponenten (ii), eine oder mehrere oberhalb einer bestimmten Temperatur flüssige Phasen und gegebenenfalls weitere Komponenten, insbesondere wie unten näher definiert, beinhalten. Die Behältnisse werden durch übliche Methoden verschlossen, beispielsweise durch Verschweißen, Verkleben, verschrauben, Abklemmen oder dergleichen.

Liegen zwei oder mehrere (beispielsweise geschichtete) Phasen im selben Behältnis nebeneinander vor, so können die Behältnisse vorzugsweise hart ausgebildet sein, um ein Mischen der Schichten, beispielsweise durch Walken, während der Lagerung vor dem Anbringen an Produkten und während des Anbringens im ungekühlten Zustand zu vermeiden; und/oder die Schichten können durch geeignete für nach Kühlen und Erwärmen freigesetzte Substanzen (i) oder Reaktionskomponenten (ii) permeable Sperrschichten voneinander getrennt sein, die ein makroskopisches Vermischen der Schichten verhindern (beispielsweise poröse, insbesondere nur für die Substanzen (i) oder Reaktionskomponenten (ii) in nach dem "Auftauen" freigesetzter, aber nicht in eingeschlossener Form permeable Folien oder Membranen, beispielsweise aus transparenten Materialien wie Nylonfiltermaterialien oder Ultrafiltrationsmaterialien, oder auch Gelsperren, beispielsweise aus Agar, Agarose, Pektin, Gelatine, Polyacrylamid, Polstyrol-Divinylbenzol-Kopolymeren oder Polyvinylacetat. Diese wirken als Mischungs-, wie Konvektions- und oder -Diffusionssperren. Alternativ oder ergänzend kann zum selben Zweck beispielsweise die Schicht, in der sich die eingeschlossenen Substanzen (i) oder Reaktionskomponenten (ii) befinden, durch viskositätserhöhende Zusätze oder dergleichen stabilisiert sein (beispielsweise durch Zusatz löslicher Polymere, wie Polyether, und/oder Silikone). Auch durch Abklemmen bei entsprechend nachgiebigen Behältnissen kann ein vorzeitiges Vermischen verhindert werden (die entsprechenden Abklemmvorrichtungen können dann bei oder nach dem Anbringen der Anzeigevorrichtung an die Produkte entfernt werden). Bevorzugt sind Umhüllungen oder Behältnisse ohne derartige Sperren.

Diese optional einsetzbaren Barrieren fehlen vorzugsweise, insbesondere bei solchen Anzeigeelementen, die nur in ausreichend gekühlter Form gelagert und an die Produkte angebracht werden und/oder bei denen nach Aktivierung durch "Einfrieren" (Erstarren) und "Auftauen" (Verflüssigung, Schmelzen) eine optisch erkennbare Änderung derart eintritt, dass eine Bildung beispielsweise von Schichten nicht erforderlich ist.

Das optische Erkennbarmachen geschieht beispielsweise durch spektrale Veränderungen, wie Farbänderungen, Änderungen der Transparenz, Auftreten oder Fehlen von Leuchterscheinungen, wie Photolumineszenz oder Chemilumineszenz, beispielsweise Entstehen oder Aufheben von Trübungen, oder dergleichen. Besonders bevorzugt handelt es sich dabei um farbliche Änderungen, beispielsweise das Auftreten einer Färbung (wie Blaufärbung), eine Farbänderung (beispielsweise von blau nach rot) oder eine Entfärbung (beispielsweise von blau nach farblos), oder auch die Änderung des relativen Anteils einer auftretenden oder sich abschwächenden/verschwindenden Färbung im Vergleich zu einer nicht gefärbten, anders gefärbten oder anfänglich gefärbten Region im Anzeigeelement. Eine andere bevorzugte Variante bezieht sich auf das Auftreten, Ändern (beispielsweise hinsichtlich der Farbe) oder das Löschen (Quenchen) von Leuchterscheinungen, wie Phosphoreszenz oder Fluoreszenz. "Dauerhaft" bedeutet, dass die entsprechende optische Veränderung irreversibel ist oder (beispielsweise bei nur kürzer möglichen Leuchtreaktionen, wie Chemilumineszenzen) mindestens eine gewisse Zeit andauert, beispielsweise einige Minuten oder Stunden, wie 1 min bis 24 Stunden, was beispielsweise für Transporte gekühlter Produkte, beispielsweise für Forschung oder Transplantation, von einem Gebäude oder dergleichen zu einem anderen ausreichen kann.

"Bestimmte Temperaturen" sind vorzugsweise diejenigen Temperaturen, deren Überschreiten durch die Anzeigeelemente dauerhaft angezeigt werden soll und oberhalb derer gewünschte oder erforderliche Produkteigenschaften, beispielsweise eine vorab ermittelte Haltbarkeitsdauer und/oder Qualität der mit den Anzeigeelementen überwachbaren Produkten, nicht mehr gewährleistet werden kann. Hierbei kann es sich im Falle von Tiefkühlwaren um die Temperatur handeln, bei der das zu überwachende Produkt auftaut, oder um tiefere Temperaturen, oberhalb derer (beispielsweise im Falle von biochemischen Produkten, wie Enzymen, Mikroorganismen oder dergleichen) gewünschte oder erforderliche Produkteigenschaften nicht mehr sicher gewährleistet werden können. Bei möglichen bevorzugten Anzeigeelementen liegen diese Temperaturen im Bereich zwischen -25 und + 20 °C, beispielsweise zwischen -18 °C und 7 °C. Die nachfolgend verwendeten Begriffe "Auftauen" oder "Schmelzen" beziehen sich dabei nicht notwendigerweise auf die Ware selbst, sondern in erster Linie auf die Temperatur, bei der die Medien/Phasen innerhalb des Anzeigeelements vom festen in einen verflüssigten Zustand übergehen. Vorzugsweise handelt es sich um die "Schmelztemperaturen" oder "Erstarrungstemperaturen" oder die jeweils entsprechenden Temperaturbereiche der entsprechenden Medien, d.h., Bedingung ist in erster Linie ein Übergang aus der erstarrten in eine flüssige Form (von fest nach flüssig).

Zu den Substanzen (i), die einschließbar und mindestens teilweise aus der eingeschlossenen Form in die oberhalb dieser Temperaturen flüssige Phase freisetzbar sind, gehören insbesondere
- Farbstoffe, wie Bromphenolblau, Luxol Fast Blue, Nitroblautetrazolium, Thymolblau, m-Kresolpurpur, 4-Diethylamino-4'-nitro-azobenzol (als Beispiel für Farbstoffe, die einer Solvatochromie unterliegen, die ebenfalls ausgenutzt werden kann), Methylorange, Chrysoidin, Kongorot, Bromkresolgrün, Methylrot, Bromkresolpurpur, Bromphenolrot, Bromthymolblau, Phenolrot, Neutralrot, m-Kresolpurpur, Thymolblau, Phenolphthalein, Thymolphthalein, Alizaringelb GG, Epsilonblau, Amidoschwarz 10B, Pararot, Diamantgrün, Fuchsin, Methylviolett, Kristallviolett, Malachitgrün, Alizarin, Indanthrenblau RS, Indigo, 6,6'-Dibromindigo, Thioindigo, Anthocyane, wie Cyanidin, Flavan, Kaliumcyaniidinat, Genistein, Carotin, Lycopin, β-Carotin, Phenthiazin, Methylenblau oder dergleichen wobei amphiphile Farbstoffe und / oder solche Farbstoffe, die durch Zusätze (beispielsweise Säuren oder Basen, die bei pH-Indikatoren eine Farbänderung bewirken) in dem sie umgebenden Medium nach der Freisetzung aus der Einschließung eine Farbänderung erfahren , besonders bevorzugt sind;
- Fluoreszenzfarbstoffe, wie Fluoreszein, Eosin, Rhodamin, Hydroxycumarin, Benzofuran, Texas-Rot, Biman, Phycoerythrine, Cyanin-Fluorophore Cy3^{TM}, Cy5^{TM} oder deren Derivate (Amersham Biosciences Europe GmbH, Freiburg, Germany), oder ferner Metallchelatkomplexe (beispielsweise von Lanthaniden oder Ruthenium), insbesondere solche, die durch Zusätze (beispielsweise Säuren oder Basen, die bei pHabhängigen Fluoreszenzfarbstoffen (wie Fluorescein, das im Alkalischen Fluoreszenz zeigt) eine Änderung der Fluoreszenzintensität bewirken) in dem sie umgebenden Medium nach der Freisetzung aus der Einschließung eine Änderung der Fluoreszenzintensität oder -farbe erfahren;
- Lumineszenzfarbstoffe, wie Luminol oder Cumarin, insbesondere solche, die erst durch Zusätze in dem sie umgebenden Medium nach der Freisetzung aus der Einschließung aktiviert werden;
- (insbesondere zum Einschluss in Liposomen geeignetes) Grün-fluoreszierendes Protein (GFP) oder mutierte Varianten davon;
- (insbesondere in Liposomen eingeschlossen) phosphoreszierende Stoffe, wie solche der Formel AB + Me, worin AB ein Sulfid, Selenid, Oxid oder Carbonat eines Metalls beispielsweise Ca, Ba, Sr, Mg, Be, Na, Pb oder Zn bedeutet und Me ein in Spuren beigemengtes weiteres Metall ausgewählt aus Al, Fe, Co, Ni, Cu, Zn, Mn, Ag, Sn, Sb, Tl, Pb und Bi bedeutet, insbesondere Zinksulfid-basierte phosphoreszierende Stoffe, oder solche auf Strontium-Aluminat-Basis; insbesondere solche derartige phosphoreszierende Stoffe, deren Leuchtreaktion durch Zusätze in dem sie umgebenden Medium nach der Freisetzung aus der Einschließung unterdrückt (gequencht) werden, wobei als Zusätze Quencher wie z.B. 2,4,6-Trinitrotoluol, Nitroltoluol, negativ geladene Quencher wie gelbes oder rotes Blutlaugensalz oder dergleichen in Frage kommen;
- Oligopeptidsubstrate, beispielsweise N- oder C-terminal markierte Oligopeptide mit spezifischen Spaltstellen für Proteasen oder Peptidasen, z.B. o-Aminobenzoyat-GFSPFR-N-(2,4-dinitrophenyl)ethylendiamin als spaltbares Peptid für Thimet-Oligopeptidase (EC 3.4.24.15) oder Neurolysin (EC 3.4.24.16), oder kurze fluorogene Peptide wie Adamantan-acetyl-(6-aminohexanoyl)-(3)leucinyl-(3)-vinyl-(methyl)-sulfon als Spaltsubstrat für Proteasomen; oder solche mit anderen funktionellen Gruppen, wobei die Oligopeptidsubstrate oder ferner deren Spaltprodukte fluoreszierende oder phosphoreszierende Eigenschaften zeigen, beispielsweise mit p-Isothiocyanatophenyl-Derivaten von Platin(II)-coproporphyrin I (vgl. O'Sullivan et al., Nucleic Acids Res. 30, e144 (2002), Kessler et al., Chem. Biol. 8, 913-29 (2001); Oliveira et al., Biochemistry 40, 4417-4425 (2001);

Es sei angemerkt, dass zu Leuchtreaktionen führende Substanzen oder Reaktionskomponenten vorzugsweise für kurzzeitig funktionierende Anzeigeelemente Einsatz finden, beispielsweise für Waren oder Produkte, die in der Forschung Einsatz finden sollen.

Zu den Reaktionskomponenten (ii), die einschließbar und mindestens teilweise aus der eingeschlossenen Form in die oberhalb dieser Temperaturen flüssige Phase freisetzbar sind, gehören insbesondere Kombinationen aus 2 (oder mehr) Reagentien, von denen mindestens eines zum Einschließen in wie unten definierte mindestens teilweise die Substanzen (i) und/oder Reaktionskomponenten (ii) umschließenden molekularen Hüllen geeignet ist, während mindestens eine weitere Komponente im oberhalb der Erstarrungstemperatur flüssigen Medium gelöst oder dispergiert vorliegen, so dass die Komponenten erst nach einem Einfrier- und Auftauvorgang miteinander reagieren können und so zum optischen Erkennbarmachen einer Unterbrechung der Kühlkette führen. Teilweise wurden derartige Mehrkomponentensysteme bereits vorstehend erwähnt; darüber hinaus kommen folgende Reaktionskomponenten in Frage, wobei jeweils eine oder mehrere geeignete der Komponenten in vor dem Einfrieren und Auftauen eingeschlossener Form vorliegen:

### Enzym/Substratkombinationen:

- Luciferase (z.B. aus Glühwürmchen oder aus Bakterien) gekoppelt mit Substrat Luciferin; möglich ist auch Kombination mit zusätzlicher Alkalischer Phosphatase (AP) für eine gekoppelte Reaktion mit Alkalischer Phosphatase und D-Luciferin-O-Phosphat als AP-Substrat, dann Umwandlung des gebildeten D-Luciferins in Anwesenheit von ATP, O₂ und Mg²⁺-Ionen unter Lichtaussendung in Oxyluciferin; oder mit Glucose-6-phosphat-oxidoreduktase und (beispielsweise bakterieller) Luciferase - das aus dem Substrat FMN durch die Redoxreaktion gebildete FMNH₂ wird in Anwesenheit von Decanal und Sauerstoff unter Lichtaussendung oxidiert;
- Renilla-Luciferase aus Seeanemone mit Coelenterazin, in Gegenwart von optionalem weiterem Zusatz von Grünfluoreszierendem Protein kommt es zu grüner Sekundärfluoreszenz; oder
- Kombination von Peroxidase (insbesondere Meerettich-Peroxidase) und Luminol (führt zur Oxidation von Luminol, bestimmte Zusätze wie Phenole (z.B. p-Iodphenol), Naphthole (z.B. 1-Brom-2-chlornaphthol), Amine (z.B. p-Anisidin) oder Cumarine erhöhen die Chemilumineszenz.

### Nicht-leuchtend:

- Alkalische Phosphatase (beispielsweise aus Rindsoder Kalbsdarmmukosa, Bakterien, Rinderleber, Rinderplacenta oder dergleichen) plus PNPP (p-Nitrophenylphosphat) oder plus Kombination aus BCIP (5-Brom-4-chlor-3'-indolylphosphat-p-Toluidinsalz) und NBT (Nitroblue-Tetrazoliumchlorid); oder plus Fast Red TR/AS-MX-Substratgemisch;
- Peroxidasen wie Meerettich-Peroxidase, Soyabohnen-Peroxidase, plus TMB (Tetramethylbenzidin), AEC (3-Amino-9-ethylcarbazol), 5AS (5-Aminosalicylsäure), DAB (3,3'-Diaminobenzidin), Guaiacol, ABTSD (2,2'-Azinobis[3-ethylbenzothiazolin-6-sulfonsäure], ABTS (2,2-Azino-di-(3-ethyl)-benzthiazolinphosphat, OPD (o-Phenylendiamin), Pyrogallol, CN (4-Chloronaphthol) oder TMB (3,3',5,5'-Tetramethylbenzidin), jeweils in Gegenwart von Peroxiden, wie Wasserstoffperoxid oder ferner organischen Peroxiden;
- β-Galactosidase plus o-NPG (ortho-Nitrophenyl-β-D-Galactopyranosid); oder
- Peptidasen oder Proteasen wie Thimet-Oligopeptidase oder Neurolysin, welche die oben genannten Oligopeptidsubstrate an spezifischen Stellen spalten können und auf diese Weise als Quencher, in anderen Fällen als Aktivatoren für fluorogene oder phosphoreszierende Substrate oder Chromophore dienen können.

### Ferner ist auch eine Kombination aus elektronenabgebenden Farbstoffkomponenten als erster Komponente, beispielsweise

- Leukofarbstoffen wie Triphenylmethan-, Fluoran-, Phenothiazin-, Auramin- oder Spiropyranverbindungen oder Indolinophthalid und dergleichen, die mit Akzeptoren Farbigkeit ergeben, plus als zweiter Komponente korrespondierenden elektronenaufnehmenden Verbindungen (Akzeptoren), die es ermöglichen, dass die erwähnten elektronenabgebenden Farbstoffkomponenten sich färben (beispielsweise bei schlechter Löslichkeit der bei Kombination der Komponenten zu Komplexen in der sie umgebenden Phase), beispielsweise die in DE 199 11 484 genannten, welche hier diesbezüglich durch Bezugnahme inkorporiert wird, wie 2,2-Bis(hydroxyphenyl)propan;

Möglich ist auch eine Kombination von Quenchern für Fluoreszenzfarbstoffe als einer Reaktionskomponente, wie z.B. TAMRA (Tetramethylrhodamin, geignet z.B. als Quencher für Fluorescein) oder "Black Hole Quenchers" (geeignet insbesondere für Metallchelatkomplexe), mit Fluoreszenzfarbstoffen als zweiter Komponente (hier ist dann fehlende Fluoreszenz der Nachweis für einen Frier-/Auftauzyklus innerhalb einer Kühlkette);
oder es können Farbstoffe (wie oben genannt) als die eine und entfärbende Substanzen, wie Oxidationsmittel, als zweite Komponente kombiniert werden;
alternativ können auch (beispielsweise in Kronenether oder dergleichen einschließbare) Ionen als erste Komponente (insbesondere Metallkationen, wie Mg²⁺, Ca²⁺, Sr²⁺, Ba²⁺, Al³⁺, Fe²⁺, Al³⁺, Co²⁺, Ni²⁺, Cu²⁺, Zn²⁺) und mit diesen farbige Komplexe bildende Komplexbildner (die, falls die Ionen in freier Form vorliegen sollen, auch einschließbar sein können, wie Eriochromschwarz T, Murexid, Metallphthalein, Brenzcatechinviolett, 1-[2-Pyridazo]-resorcin, Calconcarbonsäure, Xylenylorange, Cibalan (Ciba Spezialitätenchemie), Irgalan (Ciba Spezialitätenchemie) oder Ortolan (BASF)) als zweite Komponente als Reaktionspartner verwendet werden, oder
es können mittels gegenüber der zweiten Komponente stärkeren und/oder in größerer Menge vorhandenen Komplexbildnern (wie Nitriloessigsäure, Diaminocyclohexantetraessigsäure oder Ethylendiamintetraeessigsäure als erster Komponente farbige Metall-Komplexe (beispielsweise von Eriochromschwarz T, Murexid, Metallphthalein, Brenzcatechinviolett, 1-[2-Pyridazo]-resorcin, Calconcarbonsäure, Xylenylorange oder dergleichen) als zweite Komponente verwendet werden, die durch Entziehung ihrer Metallionen (insbesondere wie gerade genannt) beispielsweise entfärbt oder umgefärbt werden.

Die mindestens teilweise die Substanzen (i) und/oder Reaktionskomponenten (ii) umschließenden molekularen Hüllen umfassen insbesondere Coronanden, Spheranden, Cavitanden, Carcevanden, Kryptanden, Podanden, Calixarene oder Liposomen, welche die Eigenschaft haben, bei Einfrier- und anschließenden Schmelz(= Auftau-)vorgängen ihre Eigenschaften so zu ändern, dass dabei eingeschlossene Moleküle freigesetzt werden. Vorzugsweise handelt es sich um
(a) Kronenether (geeignet insbesondere für die Bindung von Kationen)
(b) mindestens teilweise geschlossene, wie helikale, Strukturen bildende Oligo- oder Polysaccharide oder deren Derivate (beispielsweise an einzelnen oder mehreren Hydroxygruppen alkyliert mit Niederalkylresten, wie Methyl oder Ethyl, oder Epichlorhydrinmodifizierte Derivate, oder verzweigtkettige Derivate, beispielsweise Glucosyl- oder Maltosyl-Derivate), insbesondere Cyclodextrine, in erster Linie α-Cyclodextrin, γ-Cyclodextrin oder insbesondere β-Cyclodextrin, oder Derivate von Cyclodextrinen, wie alkylierte Formen, z.B. Hydroxypropyl-β-Cyclodextrin, Heptakis-(2,6-di-O-methyl)-β-Cyclodextrin, Diethyl-β-Cyclodextrin, Triethyl-β-Cyclodextrin oder dergleichen, verzweigte Derivate, wie Maltosyl-, Glucosyl- oder Di-Maltosyl-β-Cyclodextrin, oder β-Cyclodextrin-Epichlorhydrin-Polymere;
(c) Cathenane
(d) Rotaxane
(e) cyclische Peptide
(f) Diazapolyoxamakrobicyclen
(g) Tetraglyme
(h) Komplexone
(i) Chelatkomplexe, beispielsweise von Ethylendiamintetraessigsäure, oder
(j) Liposomen, welche aus einer Doppelschicht aus Stoffen mit gleichzeitig hydrophilen und hydrophoben Eigenschaften bestehen, wobei als hydrophile (polare) Gruppen Phosphat, Carboxy (-COOH), Sulfat (-SO₄H), Amino, Hydroxy, eine Cholingruppe, oder dergleichen, als hydrophobe (nicht-polare) Gruppe ein Kohlenwasserstoffrest, beispielsweise Alkyl, Alkenyl oder Alkinyl, jeweils mit aromatischen oder cycloaliphatischen Resten substituierte derartige Reste, oder dergleichen, in Frage kommen. Vorzugsweise bestehen sie aus einer Phospholipiddoppelschicht, wobei sich als Verkapselungsmaterialien beispielsweise Lecithin, Phosphatidylethanolamin, Phosphatidinsäure oder dergleichen, wie auch Gemische von zwei oder mehr derartigen Komponenten, eignen. Gewünschtenfalls können die Liposomen durch UV- oder Lichtbestrahlung brüchiger gemacht werden.

Die unter (b) und (j) genannten molekularen Hüllen sind besonders bevorzugt.

Dass die Einschließung sowie die eingeschlossenen oder einzuschließenden Substanzen und/oder Reaktionskomponenten derart ausgebildet sind, dass diese erst nach dem Unterschreiten, insbesondere unter Erstarren des sie umgebenden Mediums, und anschließenden Überschreiten, insbesondere unter Schmelzen des sie umgebenden Mediums, der besagten bestimmten (insbesondere Auftau-)Temperaturen mindestens teilweise aus eingeschlossenen Form in die oberhalb dieser Temperaturen flüssige Phase freisetzbar sind und dort zu einer dauerhaften optisch, insbesondere visuell, erfassbaren Veränderung des Anzeigeelementes führen, besagt insbesondere, dass vor einem Verfestigen (Erstarren) durch Abkühlen (z.B. "Gefrieren") eines flüssigen Mediums (= einer Phase), in dem (der) die eingeschlossene(n) Verbindung(en) vorliegen, und dessen anschließendem Verflüssigen durch Erwärmung ("Auftauen", "Schmelzen") keine oder keine optisch erkennbare Freisetzung der entsprechenden Substanzen und/oder Reaktionskomponenten erfolgt, sondern eine Freisetzung aus der Einschlussverbindung (Begriff hier im weitesten Sinne verwendet) erst durch das Verfestigen und Erwärmen und stattfinden kann.

Zu den oberhalb einer bestimmten Temperatur flüssigen Phasen (= Medien) zählen solche Lösungsmittel oder Lösungsmittelgemische, die unterhalb einer wie oben definierten bestimmten Temperatur oder innerhalb eines um diese Temperatur liegenden Temperaturbereichs beim Abkühlen erstarren bzw. beim Erwärmen "auftauen" = schmelzen. Hierzu zählen in erster Linie hydrophobe Medien, insbesondere ausgewählt aus hydrophoben Fetten oder Ölen, wie insbesondere Triglyzeriden; Wachsen; Fettalkoholen, wie insbesondere gesättigten oder ein- oder mehrfach ungesättigten, verzweigten oder unverzweigten aliphatischen Fettalkoholen mit 8 oder mehr Kohlenstoffatomen, vorzugsweise mit bis zu 26 Kohlenstoffatomen, wie Laurinalkohol, Myristinalkohol, Cetylalkohol oder Cerylalkohol; und Fettsäuren, wie insbesondere gesättigten oder ein- oder mehrfach ungesättigten, verzweigten oder unverzweigten aliphatischen Monocarbonsäuren, vorzugsweise mit 6 bis 26 Kohlenstoffatomen, wie Capron-, Capryl-, Caprin-, Laurin-, Myristin-, Palmitin-, Stearin-, Öl-, Linol- oder Linolensäure; oder Gemischen von zwei oder mehr dieser Komponenten.

Sofern diese nicht bereits direkt die entsprechenden Verflüssigungs- bzw. umgekehrt Erstarrungstemperaturen aufweisen, kann durch Mischung je nach Zusammensetzung gezielt ein spezifischer Schmelzpunkt oder -bereich eingestellt werden.

Daneben sind jedoch auch hydrophile, insbesondere wässrige Medien (insbesondere, sofern es sich bei den umschließenden molekularen Hüllen um Liposomen handelt) möglich, deren Schmelzpunkt durch Zusatz geeigneter schmelzpunkterniedrigender Substanzen, beispielsweise von Alkoholen, wie Ethylenglykol, Glycerin, Sorbit oder Mannitol, Dimethylsulfoxid, oder Antigefrierpeptiden, -proteinen oder-glykoproteinen, eingestellt werden kann.

Insbesondere sofern die Anzeigeelemente essbare Komponenten beinhalten oder nur aus solchen bestehen können sie auch beispielsweise Geschmacks-, Aroma- und/oder ferner Farbstoffe, oder dergleichen, enthalten, beispielsweise zur Verwendung als Speisewürze für die Produkte oder als zusätzlichen besonderen Werbegag oder Kniff beispielsweise für Kinder.

Als weitere Komponenten können beispielsweise
(1) Netzmittel, oberflächenaktive Substanzen, Phasenvermittler oder Emulgatoren, beispielsweise anionische, wie Gallensäuren, Dioctylbernsteinsäuredieester (z.B. als Na-Salz), Laurylschwefelsäure (z.B. als Na-Salz), Stearylschwefelsäure (z.B. als Na-Salz) Stearyltartrat oder -citrat, kationische, wie quaternäre Ammoniumverbindungen, z.B. Cetyltrimethylammoniumbromid oder Lauryldimethylbenzylammoniumchlorid, nichtionische, wie Glykolmonoester, Polyoxyethylenfettsäureester, Propylenglykolfettsäureester, Mono- oder Diglyceride beispielsweise von Essigsäure, Milchsäure, Bernsteinsäure oder Diacetylweinsäure, Polyoxyethylenester von Fettsäure ®(z.B. Cremophor A®), Polymerisationsprodukte aus Ethylenoxid und Propylenoxid bzw. Propylenglykol (wie Pluronics®), oder amphiphile, wie Ampholytseifen, wie waschaktive Aminosäuren mit höherem Molekulargewicht und amphoterem Charakter, wobei der lipophile Rest aus einer Alkylkette, der hydrophile Rest aus eine Polyaminoessigsäure besteht,
(2) Lösungsvermittler, wie Alkohole, z.B. Ethanol, Glykol oder Glycerin, oder Dimethylsulfoxid;
(3) Mittel zum Haltbarmachen, wie Antioxidantien, z.B. α-Tocopherol, Butylhydroxyanisol (BHA) oder Butylhydroxytoluol (BHT), Sterisch gehinderte Amine (HALS), Proteine, wie Collagen oder Rinderserumalbumin,
(4) Stabilisatoren, wie lösliche (z.B. künstliche) Polymere, wie Polyvinylpyrrolidon oder Polyvinylacetat, Desinitiatoren, Peroxid-Desaktivatoren (sofern nicht gerade Peroxide relevant sind für eine Anzeige),
(5) Lichtschutzmittel, wie UV-Absorber, z.B. o-Hydroxybenzophenon, oder Vorstufen, wie Phenylsalicylat,
(6) Puffer, wie sie beispielsweise für Enzyme benötigt werden;
(7) Säuren, wie HCl oder Schwefelsäure, oder Basen, wie Alkalimetallhydroxide, z.B. Natriumhydroxid, zur Einstellung eines niedrigen bzw. hohen pH-Wertes, beispielsweise, um die Färbung freigesetzter Säureindikatoren oder die Leuchtkraft von Fluoreszenzfarbstoffen zu beeinflussen;
(8) Oxidationsmittel oder Reduktionsmittel,
(9) oder anderes zugesetzt sein.

Bei allen vorstehend genannten Komponenten (einzuschließende Verbindungen, umhüllende Moleküle, oberhalb einer bestimmten Temperatur flüssigen Phasen, weitere Komponenten usw.) können jeweils auch Mischungen von zwei oder mehr der genannten Bestandteile vorliegen, soweit diese kompatibel sind.

Vorzugsweise werden einzelne oder insbesondere alle Bestandteile so ausgewählt, dass sie ökologisch unbedenklich (beispielsweise aus nachwachsenden Rohstoffen und/oder biologisch abbaubar), vorzugsweise auch essbar sind.

Die Erfindung betrifft auch Herstellungsverfahren für derartige Anzeigeelemente, dadurch gekennzeichnet, dass man die genannten Subtanzen (i) und/oder Reaktionskomponenten (ii) derartiger Substanzen (a) in sie mindestens teilweise umgebende molekulare Hüllen einschließt und, falls nicht bei diesem Schritt bereits geschehen, (b) in einer oberhalb einer bestimmten Temperatur flüssigen Phase löst oder emulgiert, und, falls nicht bereits während des Schrittes (a) und/oder (b) geschehen, in ein Anzeigebehältnis füllt.

Die Herstellung entsprechender "Einschlussverbindungen" aus einzuschließenden Verbindungen und sie umschließenden molekularen Hüllen erfolgt dabei beispielsweise durch Lösung in geeigneten Lösungsmitteln und erforderlichenfalls thermische oder Ultraschallbehandlung, wobei erforderlichenfalls anschließend nicht eingeschlossene Komponenten durch geeignete Trennmethoden (beispielsweise chromatographisch, etwa durch Gelfiltration, durch Filtration, durch Zentrifugation oder durch Ultrafiltration, z.B. im Falle von Liposomen), abgetrennt werden.

Die Erfindung betrifft auch die Verwendung der erfindungsgemäßen, durch einen Einfrier- und Auftaucyclus aktivierbaren Anzeigeelemente zum optischen Erkennbarmachen, insbesondere Visualisieren, von Unterbrechungen der Kühlkette bei Produkten, dadurch gekennzeichnet, dass entsprechende Anzeigeelemente vor oder nach dem Beginn des Kühlens an den entsprechenden Produkten befestigt werden. Insbesondere betrifft die Erfindung die Verwendung von Substanzen (i) oder Reaktionskomponenten (ii), wie oben und unten genannt, insbesondere von in Cyclodextrinen eingeschlossenen Substanzen oder Substanzkomponenten, zur Herstellung von entsprechenden Anzeigeelementen und/oder zur Anzeige von Überschreitungen bestimmter Temperaturen, wie insbesondere oben definiert.

Zu den Produkten, an denen erfindungsgemäße Anzeigeelemente befestigt werden können, zählen unter anderem Arzneimittel, Lebensmittel, zu transplantierende Gewebe oder Organe, Kulturen, beispielsweise von Zellen, wie Mikroorganismen oder Geweben (wie Haut, Knochen oder Knorpel), Blutkonserven, Blutpräparate, wärmeempfindliche Substanzen, wie Nukleinsäuren oder Proteine, Kits für analytische, diagnostische oder therapeutische Zwecke, empfindliche Chemikalien und dergleichen sowie jeweils deren Verpackungen, ohne dass diese Aufzählung als abschließend zu verstehen ist.

Schließlich betrifft die Erfindung neue Herstellungsverfahren für neue Komponenten der genannten Anzeigeelemente.

Besonders bevorzugte Ausführungsformen der Erfindung finden sich vor- und nachstehend und auch in den (hier durch Bezugnahme aufgenommenen) Unteransprüchen, insbesondere in den nachfolgend genannten Beispielen.

Diese Beispiele dienen der Illustration der Erfindung, ohne ihren Umfang einzuschränken

### Beispiel 1: Anzeigevorrichtung basierend auf molekularer Mikroverkapselung von Bromphenolblau mit Cyclodextrin und ihre Verwendung als dauerhafter Temperaturindikator für das Überschreiten von Temperaturen oberhalb +8 °C.

Die oben näher beschriebenen Eigenschaften der Cyclodextrine werden ausgenutzt, um ein hydrophobes temperatursensitives Fettsäuregemisch (inkl. seiner Zusatzstoffe) nach Einfrieren und Auftauen mit einem amphiphilen Farbstoff zu färben. Durch die Konformationsänderung des β-Cyclodextrins beim Einfrieren wird die Freisetzung des mikroverkapselten Farbstoffs ermöglicht. Nach Auftauen wird das temperatursensitive Gemisch verfärbt. Durch die Barriere zwischen hydrophober Umgebung (Fettsäuregemisch), hydrophiler Außenhülle des Cyclodextrins und amphiphilem Farbstoffmolekül wird ein Austausch während der Lagerung vor Aufbringung auf das Kühlgut weitestgehend vermieden. Die Anzeigevorrichtung kann daher bei Raumtemperatur gelagert werden. Als Behältnis für die Mischungen (Fettsäuregemisch und Farbstoff/Cyclodextrinkomponente) dient ein Plastikbehälter (Eppendorf-Reaktionsgefäss).

### Versuchsaufbau:

- Zunächst erfolgt Mikroverkapselung von Bromphenolblau (Serva Katalognummer 15375, Heidelberg, Deutschland) in β-Cyclodextrin (Sigma Katalognummer C-4805, Deisenhofen, Deutschland). Hierzu wird eine 10%-ige (w/v) β-Cyclodextrinlösung und eine äquimolare Menge an Gastmolekül 12 h lang bei 40 °C geschüttelt (Eppendorf Thermomixer Comfort), anschließend auf 25 °C abgekühlt und noch weitere 12 h lang geschüttelt. Der feste Komplex wird von nicht verkapseltem, löslichem Farbstoff durch Filtration (Millipore EH, 0,5 µm Porenweite) getrennt. Nach kurzem Waschen mit Wasser wird der Komplex im Vakuum über Blaugel getrocknet.
- Anschließend wird der Cyclodextrin-Farbstoff-Komplex in das unten definierte temperatursensitive Gemisch mit Schmelzpunkt + 8 °C (= Probe) eingebracht, indem in einem Eppendorf-Reaktionsgefäß zunächst der Komplex vorgelegt und dann mit dem Fettsäuregemisch überschichtet wird. Hierauf wird kurz gerüttelt (Heidolph-Vortex).
- Sodann folgt Ultraschallbehandlung der Probe von 4 mal 5 sec Dauer (Branson 1200, 47 kHz, 30 W HF output; Branson, Dunbury, CC, USA) zur Simulation langer Lagerungsbedingungen bei Raumtemperatur.
- Nach deren Ende wird ein Spektrum zwischen 400 und 800 nm zur Messung der Farbstoffextinktion vor dem Einfrieren der Probe aufgenommen.
- Darauf wird die Probe eingefroren.
- Danach wird die Probe aufgetaut.
- Abschließend erfolgt die Aufnahme eines Spektrums zwischen 400 und 800 nm zur Messung der Farbstoffextinktion nach Einfrieren und Auftauen der Probe.
- Spektrophotometrisch lässt sich die Erhaltung der Quantität der erhaltenen Extinktionsänderung auch nach erneutem Einfrieren und Auftauen belegen.

### Als Lösungsmittel diente das temperatursensitive Gemisch mit Schmelzpunkt + 8 °C mit folgender Zusammensetzung:

| Schmelzpunkt: + 8 °C | | |
|---|---|---|
| Zusammensetzung: | | |
| Capronsäure | C 6:0 | 0,25 % |
| Caprylsäure | C 8:0 | 2,00 % |
| Caprinsäure | C 10:0 | 1,50 % |
| Laurinsäure | C 12:0 | 11,75 % |
| Myristinsäure | C 14:0 | 4,50 % |
| Palmitinsäure | C 16:0 | 12,00 % |
| Stearinsäure | C 18:0 | 2,00 % |
| Ölsäure | C 18:1 | 57,25 % |
| Linolsäure | C 18:2 | 8,00 % |
| Linolensäure | C 18 :3 | 0,75 % |

**Tab. 1:**

| Tabellarische Zusammenfassung der Ergebnisse: | | | | |
|---|---|---|---|---|
| Untersuchte Verbindung | Wellenlänge des Absorptionsmaximums [nm] | Absorption [AUFS] | Zunahme der Absorption | Farbe des überschichteten Lösungsmittels |
| Bromphenolblau | 603 | -- | -- | blau |
| Probe mit Bromphenolblau in Cyclodextrin vor dem Einfrieren | 603 | 0,068 | -- | farblos |
| Probe nach dem Einfrieren | 603 | 0,217 | 3,2-fach | hellblau |

Somit kann mit dieser Mischung der Nachweis geführt werden, ob für eine gekühlte Ware die Temperatur von +8 °C mindestens vorübergehend überschritten wurde.

### Beispiel 2: Anzeigevorrichtung basierend auf molekularer Mikroverkapselung von Bromphenolblau mit Cyclodextrin und ihre Verwendung als dauerhafter Temperaturindikator für das Überschreiten von Temperaturen oberhalb -13 °C.

Analog dem vorstehenden Beispiel wird anstelle des +8 °C-Fetsäuregemischs ein solches mit einer Schmelztemperatur von - 13 °C mit folgender Zusammensetzung verwendet:

| Schmelzpunkt: -13 °C | | |
|---|---|---|
| Zusammensetzung: | | |
| Stearinsäure | C 18:0 | 10 % |
| Ölsäure | C 18:1 | 13 % |
| Linolsäure | C 18:2 | 76 % |
| Linolensäure | C 18:3 | 1 % |

## Patentansprüche

1. Anzeigeelement zum optischen Erkennbarmachen von Überschreitungen bestimmter Temperaturen, ***dadurch gekennzeichnet, dass*** das Anzeigeelement
(i) Substanzen und/oder
(ii) Reaktionskomponenten zur Bildung solcher Substanzen beinhaltet, die jeweils in sie mindestens teilweise umgebende molekulare Hüllen, die in einer oberhalb dieser Temperaturen flüssigen Phase gelöst und/oder emulgiert sind, eingeschlossen sind, wobei die Einschließung sowie die Substanzen und/oder Reaktionskomponenten derart ausgebildet sind, dass die entsprechenden Substanzen und/oder Reaktionskomponenten erst nach einem Unterschreiten und einem anschließenden Überschreiten der besagten bestimmten Temperaturen mindestens teilweise aus der eingeschlossenen Form in die oberhalb dieser Temperaturen flüssige Phase freisetzbar sind und dort zu einer dauerhaften optisch erfassbaren Veränderung des Anzeigeelementes führen.

2. Anzeigeelement nach Anspruch 1, worin die Substanzen (i) ausgewählt sind aus der Gruppe, die enthält:
- Farbstoffe, wie Bromphenolblau, Luxol Fast Blue, Nitroblautetrazolium, Thymolblau, m-Kresolpurpur, Farbstoffe, die einer Solvatochromie unterliegen, wie 4-Diethylamino-4'-nitro-azobenzol, Methylorange, Chrysoidin, Kongorot, Bromkresolgrün, Methylrot, Bromkresolpurpur, Bromphenolrot, Bromthymolblau, Phenolrot, Neutralrot, m-Kresolpurpur, Thymolblau, Phenolphthalein, Thymolphthalein, Alizaringelb GG, Epsilonblau, Amidoschwarz 10B, Pararot, Diamantgrün, Fuchsin, Methylviolett, Kristallviolett, Malachitgrün, Alizarin, Indanthrenblau RS, Indigo, 6,6'-Dibromindigo, Thioindigo, Anthocyane, wie Cyanidin, Flavan, Kaliumcyaniidinat, Genistein, Carotin, Lycopin, β-Carotin, Phenthiazin oder Methylenblau;
wobei amphiphile Farbstoffe und/ oder solche Farbstoffe, die durch Zusätze (beispielsweise Säuren oder Basen, die bei pH-Indikatoren eine Farbänderung bewirken) in dem sie umgebenden Medium nach der Freisetzung aus der Einschließung eine Farbänderung erfahren, besonders bevorzugt sind;
- Fluoreszenzfarbstoffe, wie Fluoreszein, Eosin, Rhodamin, Hydroxycumarin, Benzofuran, Texas-Rot, Biman, Phycoerythrine, Cyaninfluorophore Cy3 oder Cy5 oder deren Derivate, oder ferner Metallchelatkomplexe, insbesondere solche, die durch Zusätze in dem sie umgebenden Medium nach der Freisetzung aus der Einschließung eine Änderung der Fluoreszenzintensität oder -farbe erfahren;
- Lumineszenzfarbstoffe, wie Luminol oder Cumarin, insbesondere solche, die erst durch Zusätze in dem sie umgebenden Medium nach der Freisetzung aus der Einschließung aktiviert werden;
- (insbesondere zum Einschluss in Liposomen geeignetes) Grün-fluoreszierendes Protein (GFP) oder mutierte Varianten davon;
- (insbesondere in Liposomen eingeschlossen) phosphoreszierende Stoffe, wie solche der Formel AB + Me, worin AB ein Sulfid, Selenid, Oxid oder Carbonat eines Metalls, beispielsweise Ca, Ba, Sr, Mg, Be, Na, Pb oder Zn, bedeutet und Me ein in Spuren beigemengtes weiteres Metall ausgewählt aus Al, Fe, Co, Ni, Cu, Zn, Mn, Ag, Sn, Sb, Tl, Pb und Bi bedeutet, insbesondere Zinksulfid-basierte phosphoreszierende Stoffe, oder solche auf Strontium-Aluminat-Basis; insbesondere solche derartige phosphoreszierende Stoffe, deren Leuchtreaktion durch Zusätze in dem sie umgebenden Medium nach der Freisetzung aus der Einschließung unterdrückt (gequencht) werden; und
- Oligopeptidsubstrate, beispielsweise N- oder C-terminal markierte Oligopeptide mit spezifischen Spaltstellen für Proteasen oder Peptidasen, oder kurze fluorogene Peptide wie Adamantan-acetyl-(6-aminohexanoyl)-(3)leucinyl-(3)-vinyl-(methyl)-sulfon als Spaltsubstrat für Proteasomen; oder solche mit anderen funktionellen Gruppen, wobei die Oligopeptidsubstrate oder deren Spaltprodukte fluoreszierende oder phosphoreszierende Eigenschaften zeigen,;
wobei auch zwei oder mehr dieser Substanzen gleichzeitig vorliegen können; und/oder
die Reaktionskomponenten (ii) ausgewählt sind aus der Gruppe, die Kombinationen aus 2 oder mehr Reagentien, von denen mindestens eines zum Einschließen in die Reaktionskomponenten (ii) umschließenden molekularen Hüllen geeignet ist, während mindestens eine weitere Komponente im oberhalb der Erstarrungstemperatur flüssigen Medium gelöst oder dispergiert vorliegt, bestehend aus
Enzym/Substratkombinationen, insbesondere
- Luciferase gekoppelt mit Substrat Luciferin; möglich ist auch Kombination mit zusätzlicher Alkalischer Phosphatase (AP) für eine gekoppelte Reaktion mit Alkalischer Phosphatase und D-Luciferin-O-Phosphat als AP-Substrat, dann Umwandlung des gebildeten D-Luciferins in Anwesenheit von ATP, O₂ und Mg²⁺-Ionen unter Lichtaussendung in Oxyluciferin; oder mit Glucose-6-phosphat-oxidoreduktase und Luciferase;
- Renilla-Luciferase mit Coelenterazin, in Gegenwart von optionalem weiterem Zusatz von Grünfluoreszierendem Protein kommt es zu grüner Sekundärfluoreszenz; oder
- Kombination von Peroxidase und Luminol, mit oder ohne weitere Zusätze wie Phenole, Naphthole, Cumarine oder Amine zur Erhöhung der Chemilumineszenz;
- Alkalische Phosphatase plus PNPP oder plus Kombination aus BCIP und NBT; oder plus Fast Red TR/AS-MX-Substratgemisch;
- Peroxidasen plus TMB, AEC, 5AS, DAB, Guaiacol, ABTSD, ABTS, OPD, Pyrogallol, CN oder TMB, jeweils in Gegenwart von Peroxiden;
- β-Galactosidase plus o-NPG; und
- Peptidasen oder Proteasen, welche die oben genannten Oligopeptidsubstrate an spezifischen Stellen spalten können und auf diese Weise als Quencher, in anderen Fällen als Aktivatoren für fluorogene oder phosphoreszierende Substrate oder Chromophore dienen können;
Kombinationen aus elektronenabgebenden Farbstoffkomponenten als erster Komponente, insbesondere
- Leukofarbstoffen wie Triphenylmethan-, Fluoran-, Phenothiazin-, Auramin- oder Spiropyranverbindungen oder Indolinophthalid, die mit Akzeptoren Farbigkeit ergeben, plus als zweiter Komponente korrespondierenden elektronenaufnehmenden Verbindungen (Akzeptoren), die es ermöglichen, dass die erwähnten elektronenabgebenden Farbstoffkomponenten sich färben, wie 2,2-Bis(hydroxyphenyl)propan;
Kombinationen von Quenchern für Fluoreszenzfarbstoffe als einer Reaktionskomponente, z.B. TAMRA oder "Black Hole Quenchers", mit Fluoreszenzfarbstoffen als zweiter Komponente;
Farbstoffe (wie oben genannt) als die eine und entfärbende Substanzen, wie Oxidationsmittel, als zweite Komponente;
Ionen als erste Komponente (insbesondere Metallkationen, wie Mg²⁺, Ca²⁺, Sr²⁺, Ba²⁺, Al³⁺, Fe²⁺, Al³⁺, CO²⁺, Ni²⁺, Cu²⁺, Zn²⁺) und mit diesen farbige Komplexe bildende Komplexbildner, wie Eriochromschwarz T, Murexid, Metallphthalein, Brenzcatechinviolett, 1-[2-Pyridazo]-resorcin, Calconcarbonsäure, Xylenylorange, Cibalan, Irgalan oder Ortolan als zweite Komponente als Reaktionspartner verwendet werden; mittels gegenüber der zweiten Komponente stärkeren und/oder in größerer Menge vorhandenen Komplexbildnern, wie Nitriloessigsäure, Diaminocyclohexantetraessigsäure oder Ethylendiamintetraeessigsäure als erster Komponente entfärbbare farbige Metall-Komplexe, beispielsweise von Eriochromschwarz T, Murexid, Metallphthalein, Brenzcatechinviolett, 1-[2-Pyridazo]-resorcin, Calconcarbonsäure oder Xylenylorange als zweite Komponente.

3. Anzeigeelemente nach einem der Ansprüche 1 oder 2, worin die mindestens teilweise die Substanzen (i) und/oder Reaktionskomponenten (ii) umschließenden molekularen Hüllen Coronanden, Spheranden, Cavitanden, Carcevanden, Kryptanden, Podanden, Calixarene oder Liposomen sind, oder Mischungen von zwei oder mehr davon, welche bei Einfrierund anschließenden Schmelzvorgängen ihre Eigenschaften so ändern, dass dabei eingeschlossene Moleküle freigesetzt werden.

4. Anzeigeelemente nach einem der Ansprüche 1 bis 3, worin die mindestens teilweise die Substanzen (i) und/oder Reaktionskomponenten (ii) umschließenden molekularen Hüllen ausgewählt sind aus der Gruppe, die beinhaltet
(a) Kronenether;
(b) mindestens teilweise geschlossene Strukturen bildende Oligo- oder Polysaccharide oder deren Derivate, wobei bei den Derivaten insbesondere solche vorliegen, die an einzelnen oder mehreren Hydroxygruppen alkyliert sind mit Niederalkylresten, wie Methyl oder Ethyl, Epichlorhydrinmodifizierte Derivate oder verzweigtkettige Derivate, wie Glucosyl- oder Maltosyl-Derivate; insbesondere Cyclodextrine, in erster Linie α-, γ- oder vor allem β-Cyclodextrin, oder Derivate von Cyclodextrinen, wie alkylierte Formen, z.B. Hydroxypropyl-β-cyclodextrin, Heptakis-(2,6-di-O-methyl)-β-cyclodextrin, Diethyl-β-cyclodextrin oder Triethyl-β-cyclodextrin, verzweigte Derivate, wie Maltosyl-, Glucosyl- oder Di-Maltosyl-β-cyclodextrin, oder β-Cyclodextrin-Epichlorhydrin-Polymere;
(c) Cathenane;
(d) Rotaxane;
(e) cyclische Peptide;
(f) Diazapolyoxamakrobicyclen;
(g) Tetraglyme;
(h) Komplexone;
(i) Chelatkomplexe, insbesondere von Ethylendiamintetraessigsäure, und
(j) Liposomen, welche aus einer Doppelschicht aus Stoffen mit gleichzeitig hydrophilen und hydrophoben Eigenschaften bestehen, wobei als hydrophile Gruppen Phosphat, Carboxy, Sulfat, Amino, Hydroxy oder eine Cholingruppe, als hydrophobe Gruppe ein Kohlenwasserstoffrest, beispielsweise Alkyl, Alkenyl oder Alkinyl, oder jeweils mit aromatischen oder cycloaliphatischen Resten substituierte derartige Reste, vorhanden sind; vorzugsweise aus einer Phospholipiddoppelschicht, insbesondere aus Lecithin, Phosphatidylethanolamin und/oder Phosphatidinsäure; vorzugsweise aus den unter (b) und (j) genannten molekularen Hüllen.

5. Anzeigeelement nach einem der Ansprüche 1 bis 4, wobei als Anzeigebehältnis eine mindestens an einer Stelle oder insgesamt transparente Umhüllung oder ein entsprechender Behälter vorhanden ist, insbesondere aus einem transparenten Material, vorzugsweise aus Kunststoffen, vor allem in Beutelform, wobei die Materialien insbesondere aus Polyvinylalkohol, Poly((vinylalkohol) ₇₀-co-(ethylen)₃₀), Polyvinylchlorid, Copolymeren aus Vinylidenchlorid und Vinylchlorid und/oder Acrylnitril, Polyamid 6 (biaxial orientiert), Polyethylen, Polypropylen, Polyethylen-(terephthalat), Polystyrol, Polycarbonat, Poly(methyl-(meth)acrylat, Poly(hydroxybutyrat-co-valerat, Polyetherimid, und vorzugsweise aus nachwachsenden Rohstoffen herstellbaren Folien, etwa aus Zellglas, oder insbesondere entsprechenden biologisch abbaubaren Folien, beispielsweise basierend auf Stärke, Chitosan, Casein, Zein oder Polyhydroxybutyrat, erforderlichenfalls lackiert oder beschichtet, ausgewählt sind; falls nötig oder erwünscht, jeweils mit einem oder mehreren üblichen Zusatzstoffen, insbesondere ausgewählt aus Weichmachern, Licht- und UV-Stabilisatoren und Sensibilisatoren.

6. Anzeigeelement nach einem der Ansprüche 1 bis 5, wobei als oberhalb der bestimmten Temperaturen flüssige Phase hydrophobe Medien, insbesondere ausgewählt aus hydrophoben Fetten oder Ölen; Wachsen; Fettalkoholen, wie Laurinalkohol, Myristinalkohol, Cetylalkohol oder Cerylalkohol; und Fettsäuren, z.B. Capron-, Capryl-, Caprin-, Laurin-, Myristin-, Palmitin-, Stearin-, Öl-, Linol- oder Linolensäure; oder Gemische von zwei oder mehr dieser Komponenten; oder hydrophile, insbesondere wässrige, Medien, deren Schmelzpunkt durch Zusatz geeigneter schmelzpunkterniedrigender Substanzen, beispielsweise von Alkoholen, Dimethylsulfoxid oder Antigefrierpeptiden,-proteinen oder -glykoproteinen, eingestellt ist; vorhanden sind.

7. Anzeigeelement nach einem der Ansprüche 1 bis 6, wobei die zu bestimmende Temperatur zwischen -25 und + 20 °C, beispielsweise zwischen -18 °C und 7 °C liegt.

8. Anzeigeelement nach einem der Ansprüche 1 bis 7, **dadurch gekennzeichnet, dass** einzelne oder insbesondere alle Bestandteile biologisch abbaubar und/oder essbar sind.

9. Verfahren zur Herstellung für Anzeigeelemente nach einem der Ansprüche 1 bis 8, **dadurch gekennzeichnet, dass** man die genannten Substanzen (i) und/oder Reaktionskomponenten (ii) derartiger Substanzen
(a) in sie mindestens teilweise umgebende molekulare Hüllen einschließt und, falls nicht bei diesem Schritt bereits geschehen,
(b) (b) in einer oberhalb einer bestimmten Temperatur flüssigen Phase löst oder emulgiert, und,
(c) falls nicht bereits während des Schrittes (a) und/oder (b) geschehen, in ein Anzeigebehältnis füllt.

10. Verwendung eines Anzeigeelementes nach einem der Ansprüche 1 bis 8 zum optischen Erkennbarmachen, insbesondere Visualisieren, von Unterbrechungen der Kühlkette bei Produkten, **dadurch gekennzeichnet, dass** entsprechende Anzeigeelemente vor oder nach dem Beginn des Kühlens an den entsprechenden Produkten befestigt werden.

11. Verwendung von (A) zur Herstellung von Einschlussverbindungen geeigneten Stoffen zur Umhüllung von (B) Substanzen (i) oder Reaktionskomponenten (ii), wie in einem der Ansprüche 1 bis 8 definiert, wobei die Komponenten (A) und (B) gemischt werden, und deren Weiterverwendung zur Herstellung von Anzeigeelementen nach einem der Ansprüche 1 bis 8.
